# EUROPEAN PATENT APPLICATION

(11) **EP 4 557 044 A1**
(43) Date of publication of application: **21.05.2025**
(21) Application number: 23855165.9
(22) Date of filing: 17.08.2023
(51) Int. Cl.: G06F 1/16, H04R 1/02, H04R 1/28

(54) **SPEAKER ASSEMBLY AND ELECTRONIC DEVICE COMPRISING SAME**

(30) Priority: 18.08.2022 KR 20220103576; 05.09.2022 KR 20220111948
(71) Applicant: Samsung Electronics Co., Ltd., Suwon-si, Gyeonggi-do 16677 (KR)
(72) Inventor: PARK, Seonguk, Suwon-si, Gyeonggi-do 16677 (KR); SEO, Pilwon, Suwon-si, Gyeonggi-do 16677 (KR); LEE, Seokwoo, Suwon-si, Gyeonggi-do 16677 (KR); HAN, Junhee, Suwon-si, Gyeonggi-do 16677 (KR); KANG, Kyungmoon, Suwon-si, Gyeonggi-do 16677 (KR); KANG, Taeuk, Suwon-si, Gyeonggi-do 16677 (KR); KIM, Jeongseob, Suwon-si, Gyeonggi-do 16677 (KR)
(74) Representative: HGF
(86) International application number: PCT/KR2023/012199
(87) International publication number: WO 2024/039199

(57) **Abstract**

An electronic device of the present disclosure may comprise: a foldable housing including a hinge, a first housing connected to the hinge, and a second housing connected to the hinge and folded with the first housing around the hinge; a first display supported by the first housing; and a second display supported by the second housing, wherein the second housing comprises: a first display support member configured to support the first display; a second display support member configured to support the second display; and a speaker assembly coupled with sealing members between the first display support member and the second display support member to form a speaker sound.

## Description

### [Technical Field]

The disclosure relates to a speaker assembly and an electronic device including the same.

### [Background Art]

Electronic devices are gradually becoming slimmer and more rigid, being enhanced in design aspects, and being improved to differentiate functional elements thereof. Electronic devices are gradually evolving from a uniform rectangular shape to diverse shapes. An electronic device may have a transformable structure that is convenient to carry and enables the use of a large-screen display. Large-screen displays are evolving from flexible types to fully foldable displays.

A foldable electronic device equipped with a foldable display allows the use of a large display area when unfolded, while reducing the overall volume of the electronic device when folded, thereby enhancing both usability and portability.

### [Disclosure of Invention]

### [Technical Problem]

The disclosure relates to an electronic device including a foldable display. The electronic device of the disclosure includes a speaker module that may be fixed between support members of a flexible display with sealing members.

### [Solution to Problem]

According to an embodiment of the disclosure, an electronic device may include a foldable housing including a hinge, a first housing connected to the hinge and including a first surface oriented in a first direction and a second surface oriented in a second direction opposite to the first direction, and a second housing connected to the hinge and including a third surface oriented in a third direction and a fourth surface oriented in a fourth direction opposite to the third direction. The second housing is folded with the first housing about the hinge, the first surface faces the third surface when folded, and the third direction is the same as the first direction when unfolded.

According to an embodiment, the electronic device may include a first display extending from the first surface to the third surface and defining at least a portion of the first surface and the third surface, and a second display defining at least a portion of the fourth surface.

According to an embodiment of the disclosure, the second housing may include a first display support member configured to support the first display, a second display support member configured to support the second display, and a speaker assembly coupled between the first display support member and the second display support member with sealing members to define a speaker volume.

According to an embodiment of the disclosure, the speaker assembly may include a first display support member disposed on a first surface oriented in a first direction, a second display support member, a speaker mounting housing configured to accommodate a speaker and output, which is sound output by the speaker, to the exterior, and a speaker volume housing coupled between the first display support member and the second display support member and configured to compress or reflect the sound from the speaker and transmit the compressed or reflected sound to the speaker mounting housing.

### [Advantageous Effects of Invention]

The electronic device of the disclosure may have an increased speaker volume by fixing the speaker assembly by using a sealing member between the support members of a flexible display.

In the electronic device of the disclosure, an electronic component mounting space may be ensured by fixing the speaker assembly by using a sealing member between the support members of the flexible display.

The electronic device of the disclosure may be slimmed by fixing the speaker assembly by using a sealing member between the support members of a flexible display.

The electronic device of the disclosure may improve speaker performance by increasing the speaker volume defined by the flexible display.

### [Brief Description of Drawings]

FIG. 1 is a block diagram of an electronic device according to an embodiment of the disclosure in a network environment.
FIGS. 2A and 2B are views illustrating an electronic device according to an embodiment of the disclosure in an unfolded state.
FIGS. 3A and 3B are views illustrating an electronic device according to an embodiment of the disclosure in a folded state.
FIG. 4 is an exploded perspective view illustrating the electronic device according to an embodiment of the disclosure in the unfolded state.
FIG. 5 is an exploded perspective view illustrating the electronic device according to an embodiment of the disclosure in the unfolded state.
FIG. 6A is an exploded perspective view of a second speaker assembly according to an embodiment of the disclosure.
FIG. 6B is an exploded perspective view of the second speaker assembly according to an embodiment of the disclosure.
FIG. 6C is an exploded perspective view of the second speaker assembly according to an embodiment of the disclosure.
FIG. 7 is a cross-sectional view of an electronic device and the second speaker assembly according to an embodiment of the disclosure.
FIG. 8A is a cross-sectional view of the electronic device according to an embodiment of the disclosure and the second speaker assembly of FIG. 6A.
FIG. 8B is a cross-sectional view of the electronic device according to an embodiment of the disclosure and the second speaker assembly of FIG. 6B.
FIG. 8C is a cross-sectional view of the electronic device according to an embodiment of the disclosure and the second speaker assembly of FIG. 6C.
FIG. 9 is a cross-sectional view of the first speaker frame according to an embodiment of the disclosure taken along line A-B in FIG. 6A.
FIG. 10 is a graph showing frequency characteristics depending on the volume of the speaker volume space of the second speaker assembly according to an embodiment of the disclosure.
FIG. 11 is a graph showing phase characteristics depending on the volume of the speaker volume space of the second speaker assembly according to an embodiment of the disclosure.

### [Mode for the Invention]

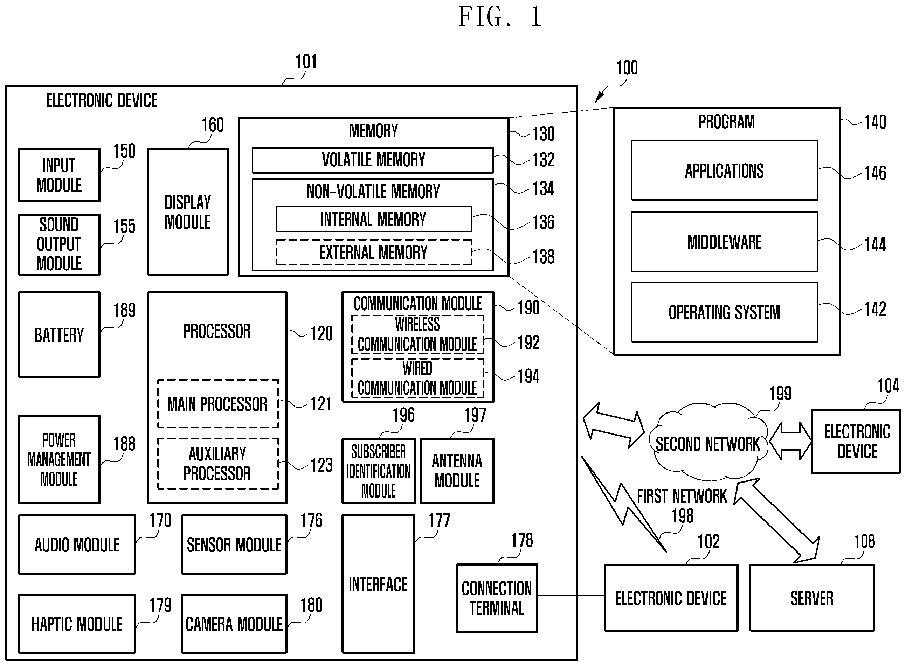

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

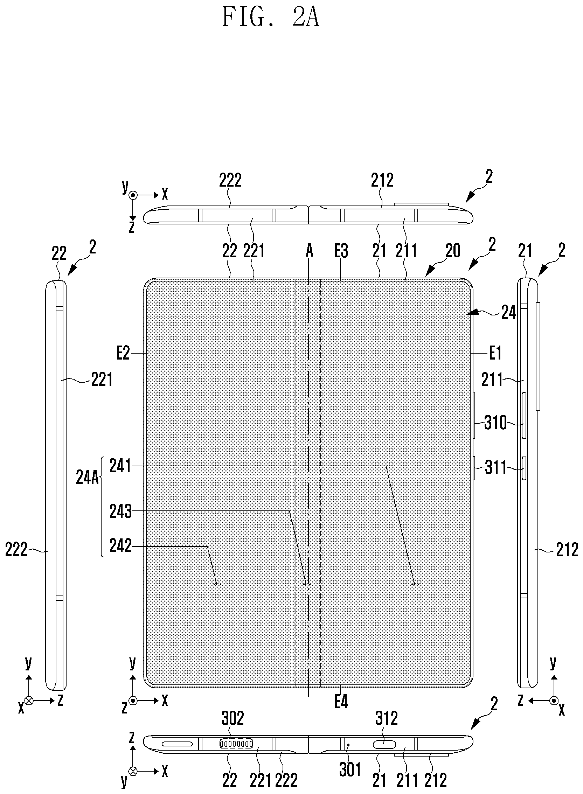

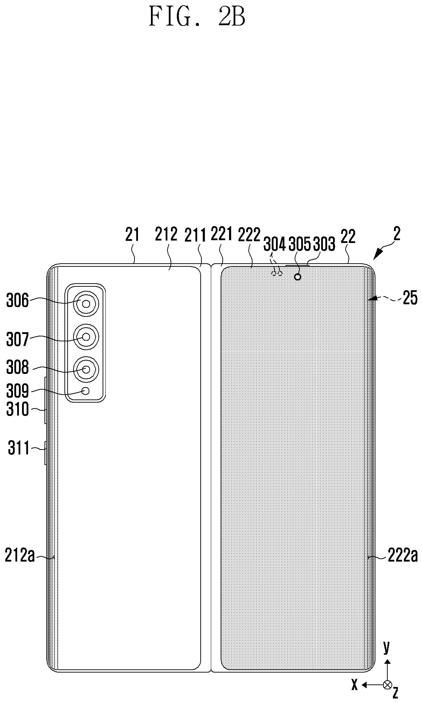

FIGS. 2A and 2B are views illustrating an electronic device 2 according to an embodiment of the disclosure in an unfolded state (or a folding state or a flat state).

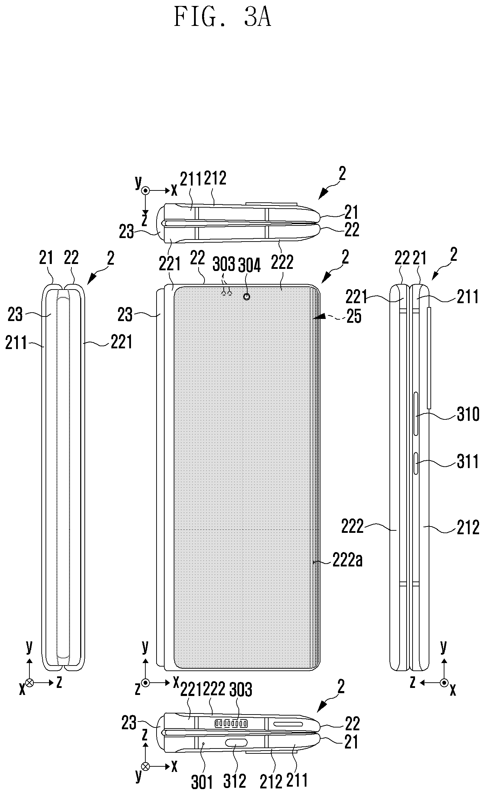

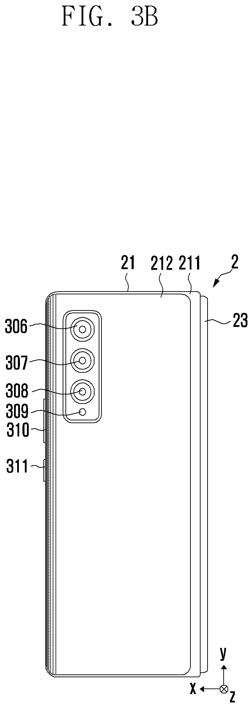

FIGS. 3A and 3B are views illustrating the electronic device 2 according to an embodiment of the disclosure in a folded state (or a folding state).

Referring to FIGS. 2A to 3B, the electronic device 2 may include a foldable housing 20, a first display (e.g., a flexible display or a foldable display) 24, and/or a second display 25.

According to an embodiment of the disclosure, the electronic device 2 may be the electronic device 101 of FIG. 1.

According to an embodiment of the disclosure, the foldable housing 20 may include a first housing (or a first housing part or a first housing structure) 21, a second housing (or a second housing part or a second housing structure) 22, and/or a hinge part H. The first housing 21 and the second housing 22 may be connected via the hinge part H and may be mutually rotatable with respect to the hinge part H. The hinge part H may include one or more hinge modules (or hinge assemblies).

According to an embodiment, the display area 24A of the first display 24 is an active area of the first display 24 capable of displaying an image, and may include a first display area (or a first active area or a first screen area) 241, a second display area (or a second active area or a second screen area) 242, and a third display area (or a third active area or a third screen area) 243 connecting the first display area 241 and the second display area 242. The first display area 241 may be positioned to correspond to the second housing 21. The second display area 242 may be positioned to correspond to the second housing 22. The third display area 243 may be positioned to correspond to the hinge part. The first display area 241 may be disposed in the first housing 21, and the shape of the first display area 241 may be maintained by being supported by the first housing 21. The second display area 242 may be disposed in the second housing 22, and the shape of the second display area 242 may be maintained by being supported by the second housing 22.

The first display area 241 and the second display area 242 may be provided, for example, to be substantially flat. The unfolded state of the electronic device 2 (see FIGS. 2A and 2B) may be the state in which the third display area 243 is arranged to be substantially flat. In the unfolded state of the electronic device 2, the first display area 241 and the second display area 242 may form an angle of about 180 degrees, and the display area 24A including the first display area 241, the second display area 242, and the third display area 243 may be provided (or arranged) in a substantially flat form. Due to the relative positions between the first display area 241 disposed on the first housing 21 and the second display area 242 disposed on the second housing 22 in the unfolded state of the electronic device 2, the third display area 243 connecting the first display area 241 and the second display area 242 may be laid flat. In the unfolded state of the electronic device 2, the third display area 243 may be pulled out on opposite sides by the first display area 241 and the second display area 242, and the pulling force may be provided to reduce damage to the third display area 243 while allowing the third display area 243 to be laid flat.

In an embodiment of the disclosure, the third display area 243 may be provided with an extended width that allows it to be laid flat while reducing stress by being pulled out by the first display area 241 and the second display area 242 in the unfolded state of the electronic device 2. When the electronic device 2 is in the unfolded state, the hinge part may support the third display area 243. When an external force (e.g., an external pressure such as a touch input made by using a user's finger or a touch input made by using an electronic pen) is applied to the third display area 243 when the electronic device 2 is in the unfolded state, the hinge part may contribute to maintaining the third display area 243 to be flat by reducing sagging of the third display area 243. The hinge may be configured to reduce the effect of an external impact on the third display area 243 when the external impact is applied due to a reason such as a drop when the electronic device 2 is in the unfolded state. When the electronic device 2 is in the unfolded state, the hinge may support the third display area 243 to allow the third area 243 to be laid flat without sagging, thereby reducing a crease phenomenon. The illustrated coordinate axes are illustrated based on the first housing 21, and for example, the +z-axis direction may be interpreted as the direction in which the plane provided by the flat first display area 241 is oriented.

According to an embodiment of the disclosure, the electronic device 2 may be provided in an infolding type in which the display area 24A of the first display 24 is folded inward.

In an embodiment, the display module 160 of FIG. 1 may be a display or a display device. The display module 160 may include the first display 24 or the second display 25.

FIGS. 3A and 3B illustrate the fully folded state of the electronic device 2, in which the first housing 21 and the second housing 22 are arranged to ensure that they no longer come close to each other. In the fully folded state of the electronic device 2, the first display area 241 and the second display area 242 may be positioned to face each other, and the third display area 243 may be disposed in a bent form. In the fully folded state of the electronic device 2, the angle between the first housing 21 and the second housing 22 (or the angle between the first display area 241 and the second display area 242) may range from about 0 degrees to about 10 degrees, and the display area 24A may be substantially invisible. Although not illustrated, the intermediate state of the electronic device 2 may be a state between the unfolded state and the fully folded state. In the intermediate state in which the angle between the first housing 21 and the second housing 22 is equal to or greater than a certain angle, a use environment in which a user does not have substantial difficulty in using the display area 24A may be provided. Hereinafter, the "folded state of the electronic device 2" described herein may refer to the fully folded state as opposed to the intermediate state which is the less folded state.

According to an embodiment of the disclosure, when the electronic device 2 is viewed in the unfolded state (see FIGS. 2A and 2B), the display area 24A of the first display 24 may be provided in a symmetrical shape with respect to the centerline A of the electronic device 2. When the electronic device 2 is viewed in the unfolded state, the centerline A may correspond to the middle of the width extending from a first boundary between the first display area 241 and the third display area 243 to a second boundary between the second display area 242 and the third display area 243.

According to an embodiment of the disclosure, the third display area 243 arranged in the bent shape in the folded state of the electronic device 2 (see FIGS. 3A and 3B) may have a substantially symmetrical shape with respect the centerline A of the electronic device 2. When the electronic device 2 is viewed in the unfolded state, the display area 24A may be substantially rectangular. The display area 24A may include a first edge E1, a second edge E2, a third edge E3, and a fourth edge E4. The first edge E1 and the second edge E2 may be substantially parallel to the centerline A. The third edge E3 may connect one end of the first edge E1 and one end of the second edge E2, and the fourth edge E4 may connect the other end of the first edge E1 and the other end of the second edge E2. The first display area 241 may include the first edge E1, a portion of the third edge E3, and a portion of the fourth edge E4. The second display area 242 may include the second edge E2, a portion of the third edge E3, and a portion of the fourth edge E4.

According to an embodiment of the disclosure, the third display area 243 may include a portion of the third edge E3 and a portion of the fourth edge E4. In the folded state of the electronic device 2, the first edge E1 and the second edge E2 may be aligned to overlap each other. In the folded state of the electronic device 2, a portion of the third edge E3 included in the first display area 241 and a portion of the third edge E3 included in the second display area 242 may be aligned to overlap each other.

According to an embodiment of the disclosure, in the folded state of the electronic device 2, a portion of the fourth edge E4 included in the first display area 241 and a portion of the fourth edge E4 included in the second display area 242 may be aligned to overlap each other.

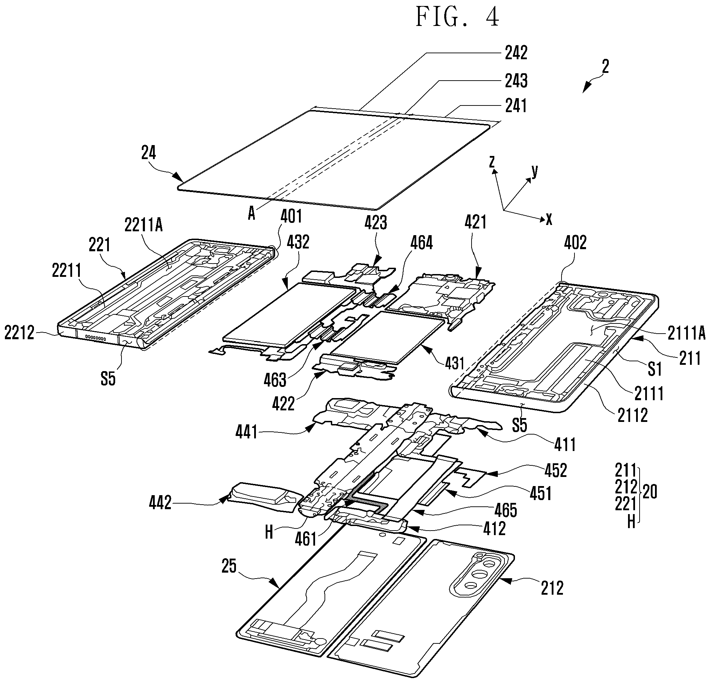

According to an embodiment of the disclosure, the first housing 21 may include a first frame (or a first frame structure or a first framework) 211, and/or a first cover 212 disposed on the first frame 211. The first frame 211 may include a first side (or a first side surface portion, a first side surface member, a first side surface structure, or a first side surface bezel structure) (e.g., the first side 2112 in FIG. 4). The first side may be arranged along an edge of the first display area 241 of the first display 24. The first side may provide a first side surface of the electronic device 2 corresponding to the first display area 241 of the electronic device 2.

In an embodiment of the disclosure, the first frame 211 may include a first support portion (e.g., the first support portion 2111 in FIG. 4) extending from the first side or connected to the first side. The first display area 241 may be disposed on the first support portion, and the first support portion may support the first display area 241. The first display area 241 and the first cover 212 may be positioned on opposite sides of the first support portion of the first frame 211. The first side of the first frame 211 may be arranged to at least partially surround the space between the first display area 241 and the first cover 212.

In an embodiment of the disclosure, the first display area 241 may provide one of the outer surfaces of the electronic device 2.

In an embodiment of the disclosure, the first cover 212 may provide another one of the outer surfaces of the electronic device 2 that substantially faces away from the first display area 241. Various electrical components (or electronic components) such as a printed circuit board or a battery may be disposed on the first support portion between the first support portion of the first frame 211 and the first cover 212.

According to an embodiment of the disclosure, the second housing 22 may include a second frame (or a second frame structure or a second framework) 221, and/or a second cover 222 disposed on the second frame 221. The second frame 221 may include a second side (or a second side surface portion, a second side surface member, a second side surface structure, or a second side surface bezel structure) (e.g., the second side 2212 in FIG. 4). The second side may be arranged along an edge of the second display area 242 of the first display module 24.

In an embodiment of the disclosure, the second side may provide a second side surface of the electronic device 2 corresponding to the second display area 242 of the electronic device 2. In the folded state of the electronic device 2 (see FIGS. 3A and 3B), the first side of the first frame 211 and the second side of the second frame 221 may be aligned to overlap each other.

In an embodiment of the disclosure, the second frame 221 may include a second support portion (e.g., the second support portion 2211 in FIG. 4) extending from the second side or connected to the second side. The second display area 242 may be disposed on the second support portion, and the second support portion may support the second display area 242. The second display area 242 and the second cover 222 may be positioned on opposite sides of the first support portion of the second frame 221. The second side of the second frame 221 may be arranged to at least partially surround the space between the second display area 242 and the second cover 222. The second display area 242 may provide one of the outer surfaces of the electronic device 2, and the second cover 222 may provide another outer surface of the electronic device 2 that substantially faces away from the second display area 242. Various electrical components (or electronic components) such as a printed circuit board or a battery may be disposed on the second support portion between the second support portion of the second frame 221 and the second cover 212.

According to an embodiment of the disclosure, the second display 25 may be located between the second frame 221 and the second cover 222. The second cover 222 may be substantially transparent, and the second display 25 may be visible through the second cover 222. In the folded state, the electronic device 2 may be configured to display an image through the first display 25 instead of the first display 24.

According to an embodiment of the disclosure, the second display 25 may be provided in a form including the second cover 222. In this case, the second cover 222 may be excluded from the foldable housing 20.

According to an embodiment of the disclosure, the first cover 212 may include a first curved area 212a that is curved and seamlessly extended toward the first display area 241 to correspond to the first edge E1 of the display area 24A. The second cover 222 may include a second curved area 222a that is curved and seamlessly extended toward the second display area 242 to correspond to the second edge E2 of the display area 24A. The first curved area 212a and the second curved area 222a may be provided symmetrically on opposite sides in either the unfolded state (see FIGS. 2A and 2B) or the folded state (see FIGS. 3A and 3B) of the electronic device 2, thereby contributing to a beautiful exterior.

In an embodiment of the disclosure, the second display 25 may include a flexible display that may be arranged to be bent along the second curved area 222a. In an embodiment, the first cover 212 may be provided substantially flat without the first curved area 212a. In an embodiment, the second cover 222 may be provided substantially flat without the second curved area 222a. In this case, the second display 25 may include a rigid display.

In an embodiment of the disclosure, the second display 25 may include a flexible display.

In an embodiment of the disclosure, the first display 24 or the second display 25 may include a display module 160.

According to an embodiment of the disclosure, the electronic device 2 may include at least one of one or more audio modules (e.g., the audio module 170 in FIG. 1), one or more sensor modules (e.g., the sensor module 176 in FIG. 1), one or more camera modules (e.g., the camera module 180 in FIG. 1), one or more light-emitting modules, one or more input modules (e.g., the input module 150 in FIG. 1), and/or one or more connection terminal modules (e.g., the interface 177 or the connection terminal 178 in FIG. 1).

According to an embodiment of the disclosure, at least one of the above-mentioned components may be omitted from the electronic device 2 or other components may be additionally included in the electronic device 2. The positions or the number of components included in the electronic device 2 may vary without being limited to the illustrated example.

Any one of the one or more audio modules may include a microphone positioned inside the electronic device 2, for example, corresponding to a microphone hole 301 provided on the exterior of the electronic device 2. In the illustrated example, the microphone hole 301 may be provided on the first side of the first frame 211, and the microphone may be positioned in the inner space of the first housing 21. The positions or numbers of microphones and microphone holes are not limited to the illustrated example and may vary.

In an embodiment of the disclosure, the electronic device 2 may include multiple microphones used to detect the direction of sound.

Any one of the one or more audio modules may include a first speaker for multimedia playback (or recording playback) positioned inside the electronic device 2, for example, corresponding to a first speaker hole 302 provided on the exterior of the electronic device 2. In the illustrated example, the first speaker hole 302 may be provided on the second side of the second frame 221, and the first speaker may be positioned in the inner space of the second housing 22. Any one of the one or more audio modules may include a second speaker (e.g., a call receiver) positioned inside the electronic device 2, for example, corresponding to a second speaker hole (e.g., a receiver hole) 303 provided on the external surface of the electronic device 2. In the illustrated example, the second speaker hole 303 may be provided in the second frame 221 adjacent to the second cover 222, and the second speaker may be positioned in the inner space of the second housing 22. The positions or numbers of speakers and speaker holes are not limited to the illustrated example and may vary. In an embodiment, a microphone hole and a speaker hole may be implemented as a single hole. In an embodiment, a piezo speaker with an omitted speaker hole may be provided.

The one or more sensor modules may generate, for example, electrical signals or data values corresponding to an internal operating state of the electronic device 2 or an external environmental state. In an embodiment, one of the one or more sensor modules may include an optical sensor 304 positioned in the inner space of the second housing 22 corresponding to the second cover 212. The optical sensor 304 may be positioned in alignment with or at least partially inserted into an opening provided in the second display 25. External light may reach the optical sensor through the second cover 222 and the opening provided in the second display 25. The optical sensor 304 may include, for example, a proximity sensor or an illuminance sensor. The number or positions of optical sensors are not limited to the illustrated examples and may vary.

According to an embodiment of the disclosure, the optical sensor 304 may be positioned in the inner space of the second housing 22 to overlap at least a portion of the display area of the second display 25 when viewed from above the second cover 222. In this case, the optical sensor 304 or the position of the optical sensor 304 may not be visually distinct (or exposed), while still allowing the sensing function of the optical sensor 304 to be performed. In an embodiment, the optical sensor 304 may be positioned on the rear surface of the second display 25 or below or beneath the second display 25, and the optical sensor 304 or the position of the optical sensor 304 may not be visually distinct (or exposed).

In an embodiment of the disclosure, the optical sensor 304 may be positioned to be aligned with or at least partially inserted into a recess provided on the rear surface of the second display 25. A portion of the second display 25 that at least partially overlaps the optical sensor 304 may include a different pixel structure and/or wiring structure from other areas. For example, a portion of the second display 25 that at least partially overlaps the optical sensor 304 may have a different pixel density compared to other areas. The pixel structure and/or wiring structure formed in a portion of the second display 25 that at least partially overlaps the optical sensor 304 may reduce light loss between the exterior and the optical sensor 304.

In an embodiment of the disclosure, multiple pixels may not be arranged in a portion of the second display 25 that at least partially overlaps the optical sensor 304.

According to an embodiment of the disclosure, various other sensors, not limited to the optical sensor 304, such as a proximity sensor or a light sensor, may be positioned corresponding to an opening provided in the second display 25, or may be positioned on the rear surface of the second display 25 or below or beneath the second display 25. For example, an optical, electrostatic, or ultrasonic biometric sensor (e.g., a fingerprint sensor) may be positioned corresponding to the opening provided in the second display 25, or may be positioned on the rear surface of the second display 25 or below or beneath the second display 25.

According to an embodiment of the disclosure, various sensors may be positioned to correspond to openings provided in the first display 24, on the rear surface of the first display 24, or below or beneath the first display 24.

According an embodiment of the disclosure, the electronic device 2 may include various other sensors (e.g., a gesture sensor, a gyro sensor, a barometric pressure sensor, a magnetic sensor, an acceleration sensor, a grip sensor, a color sensor, an infrared (IR) sensor, a temperature sensor, or humidity sensor), and the positions thereof may vary.

According to an embodiment of the disclosure, the one or more camera modules may include one or more lenses, an image sensor, and/or an image signal processor. The one or more camera modules may include, for example, a first camera module 305, a second camera module 306, a third camera module 307, and/or a fourth camera module 308.

According to an embodiment of the disclosure, the first camera module 305 may be positioned in the inner space of the second housing 22 to correspond to the second cover 222. The first camera module 305 may be positioned in alignment with or at least partially inserted into the opening provided in the second display 25. External light may reach the first camera module 305 through the second cover 222 and the opening in the second display 25. The opening of the second display 25 aligned with or overlapping the first camera module 305 may be provided in the form of a through hole, as in the illustrated example. In an embodiment, the opening of the second display 25 aligned with or overlapping the first camera module 305 may be provided in the form of a notch.

According to an embodiment of the disclosure, the first camera module 305 may be positioned in the inner space of the second housing 22 to overlap at least a portion of the display area of the second display 25 when viewed from above the second cover 222. In this case, the position of the first camera module 305 or the first camera module 305 itself may allow the image capturing function to be executed while the first camera module 305 remains visually indistinct (or unexposed) or invisible. In an embodiment, the first camera module 305 may be positioned on the rear surface of the second display 25 or below or beneath the second display 25, and the first camera module 305 or the position of the first camera module 305 may be visually indistinct (or unexposed) or invisible. In an embodiment, the first camera module 305 may be positioned in alignment with or at least partially inserted into a recess provided on the rear surface of the second display 25. The first camera module 305 may include, for example, a hidden display rear camera (e.g., an under-display camera (UDC)). A portion of the second display 25 that at least partially overlaps the first camera module 305 may include a different pixel structure and/or wiring structure compared to other areas. For example, a portion of the second display 25 that at least partially overlaps the first camera module 305 may have a different pixel density compared to other areas. The pixel structure and/or wiring structure provided in the portion of the second display 25 that at least partially overlap the first camera module 305 may reduce the loss of light between the exterior and the optical sensor. As another example, multiple pixels may not be disposed in the portion of the second display 25 that at least partially overlaps the first camera module 305.

According to an embodiment of the disclosure, the second camera module 306, the third camera module 307, or the fourth camera module 308 may be positioned within the inner space of the first housing 21, corresponding to the first cover 212. The first cover 212 may include a camera cover portion (e.g., a camera decoration portion) disposed in correspondence with the second camera module 306, the third camera module 307, and the fourth camera module 308. The camera cover portion may include a camera hole (or light-transmissive area) provided in correspondence with the second camera module 306, a camera hole (or light-transmissive area) provided in correspondence with the third camera module 307, and a camera hole (or light-transmissive area) provided in correspondence with the fourth camera module 308. The number or positions of camera modules provided in correspondence with the first cover 212 may not be limited to the illustrated example and may vary. The second camera module 306, the third camera module 307, and the fourth camera module 308 may have different attributes (e.g., fields of view) or functions from one another. The second camera module 306, the third camera module 307, and the third camera module 308 may provide different angles of view (or lenses with different angles of view), and the electronic device 2 may selectively use the corresponding camera module based on a user's selection regarding the angle of view. Any one of the second camera module 306, the third camera module 307, and the third camera module 308 may include a wide-angle camera module, a telephoto camera module, a color camera module, a monochrome camera module, or an infrared (IR) camera (e.g., a time of flight (TOF) camera or a structured light camera) module. In an embodiment, the IR camera module may also operate as at least a portion of the sensor module.

According to an embodiment of the disclosure, one of the one or more light-emitting modules may include a flash 309 positioned in the inner space of the first housing 21, corresponding to a flash hole (or light-transmitting area) provided in the camera cover portion of the first cover 212. The flash 309 may include a light source for the second camera module 306, the third camera module 307, and/or the fourth camera module 308. The flash 309 may include, for example, a light-emitting diode (LED) or a xenon lamp.

According to an embodiment of the disclosure, one of the one or more light-emitting modules (e.g., an LED, an IR LED, or a xenon lamp) may be configured to provide state information of the electronic device 2 in the form of light. In an embodiment, the light-emitting modules may provide a light source that operates in conjunction with the operation of the first camera module 305.

According to an embodiment of the disclosure, the one or more input modules may include a first key input device 310 or a second key input device 311. In the illustrated example, the first key input device 310 or the second key input device 311 may be positioned in an opening provided on the first side of the first frame 211. The positions or number of input modules may vary without being limited to the illustrated example.

In an embodiment of the disclosure, the electronic device 2 may not include some or all of the key input devices, and the key input devices that are not included may be implemented as soft keys via the first display 24 or the second display 25. In an embodiment, the input module or the key input device may include at least one sensor module.

One of the one or more connection terminal modules (or a connector module or an interface terminal module) may include a connector (or an interface terminal) positioned inside the electronic device 2, for example, corresponding to the connector hole 312 provided on the exterior of the electronic device 2. In the illustrated example, the connector hole 312 may be provided on the first side of the first frame 211. The positions or number of connection terminal modules may vary without being limited to the illustrated example. The electronic device 2 may transmit and/or receive power and/or data to an external electronic device electrically connected to the connector. In an embodiment, the connector may include a USB connector or an HDMI connector. In an embodiment, one of the one or more connection terminal modules may include an audio connector (e.g., a headphone connector or an earphone connector), and a connector hole provided on the exterior of the electronic device 2 corresponding to the audio connector. In an embodiment, one of the one or more connection terminal modules may include a connector for a memory card positioned inside the electronic device 2, and a connector hole provided on the exterior of the electronic device 2 corresponding to the connector for the memory card.

According to an embodiment of the disclosure, the electronic device 2 may include a detachable pen input device (e.g., an electronic pen, a digital pen, or a stylus pen) (not illustrated). The pen input device may be implemented to be inserted into, for example, the inner space of the first housing 21 or the second housing 22. As another example, the pen input device may be attached to or detached from the hinge housing (not illustrated). The hinge housing (not illustrated) may include a recess, and the pen input device may fit into the recess.

The electronic device 2 may further include various components depending on its provision form. Although all of these components cannot be listed since the components are modified diversely depending on the convergence trend of electronic devices 2, components equivalent to the above-mentioned components may be further included in the electronic device 2. In an embodiment, specific components may be excluded from the above components or replaced with other components depending on the provided form of the electronic device.

FIG. 4 is an exploded perspective view of an electronic device 2 according to an embodiment of the disclosure in the unfolded state.

The electronic device 2 may include a foldable housing 20, a first inner support 411, a second inner support 412, a first display 24, a second display 25, a first printed circuit board 421, a second printed circuit board 422, a third printed circuit board 423, a first battery 431, a second battery 432, a first speaker assembly 441, a second speaker assembly 442, a first antenna structure 451, a second antenna structure 452, a first flexible printed circuit board 461, a second flexible printed circuit board 463, and/or a third flexible printed circuit board 464.

According to an embodiment of the disclosure, the foldable housing 20 may include a first frame 211, a first cover 212, a second frame 221, and/or a hinge part H. The first housing 21 of FIGS. 2A and 2B may include a first frame 211 and a first cover 212. The second housing 22 of FIGS. 2A and 2B may include a second frame 221.

According to an embodiment of the disclosure, the first frame 211 may include a first support portion 2111 and a first side 2112. The first frame 211 may be provided in an integral form including the first support portion 2111 and the first side 2112. The first support portion 2111 is an internal structure located inside the electronic device 2 (see FIGS. 2A and 2B) to correspond to the first housing 21 and may be referred to as various other terms, such as a "first bracket", a "first support", and a "first support member", or a "first support structure".

In an embodiment of the disclosure, the second frame 221 may include a second support portion 2211 and a second side 2212. The second frame 221 may be provided in an integral form including the second support portion 2211 and the second side 2212. The second support portion 2211 is an internal structure located inside the electronic device 2 (see FIGS. 2A and 2B) to correspond to the second housing 22 and may be referred to as various other terms, such as a "second bracket", a "second support", a "second support member", or a "second support structure".

At least a portion of the first frame 211 and/or at least a portion of the second frame 221 of the disclosure may be made of a metal material and/or a non-metal material (e.g., polymer). Electrical components (or electronic components) or various members related to the electrical components may be disposed on or supported by the first frame 211 or the first support portion 2111. The first support portion 2111 may include, for example, a first support area 2111A facing a first display area 241, and a third support area (not illustrated) substantially facing away from the first support area 2111A. The first display area 241 of the first display 24 may be disposed in the first support area 2111A of the first support portion 2111. Various components, such as a first printed circuit board 421, a second printed circuit board 422, or a first battery 431, may be disposed on or coupled to the third support area 2111B. The second support portion 2211 may include, for example, a second support area 2211A facing the second display area 242, and a fourth support area substantially facing away from the second support area 2211A. The second display area 242 of the first display 24 may be disposed in the second support area 2211A of the second support portion 2211. Various components, such as a third printed circuit board 423 or a second battery 432, may be disposed on or coupled to the fourth support area (not illustrated).

According to an embodiment, the first display area 241 of the first display 24 may be disposed on the first support portion 2111 and the second display area 242 may be disposed on the second support portion 2211 via various adhesive materials (or bonding materials) such as a heat-reactive adhesive material (or a heat-reactive bonding material), a light-reactive adhesive material (or a light-reactive bonding material), an ordinary adhesive material (or an ordinary bonding material), and/or a double-sided tape.

In an embodiment of the disclosure, the hinge part H may connect the first frame 211 and the second frame 221.

In an embodiment of the disclosure, the first frame 211 and the second frame 221 may be rotatably connected to each other via the hinge part H.

In an embodiment of the disclosure, the hinge part H may be arranged along the centerline A of the electronic device 2.

According to an embodiment of the disclosure, the first frame 211 may include a first side portion corresponding to the hinge part H. The first side portion 401 may include a portion of the first support portion 2111 included in the first frame 211. The second frame 221 may include a second side portion 402 corresponding to the hinge part H. The second side portion 402 may include a portion of the second support 2211 included in the second frame 221.

The hinge part H may have, for example, a free-stop function.

In an embodiment of the disclosure, the hinge part H may be configured to provide a force that allows the first frame 211 and the second frame 221 to rotate relative to each other. The hinge part H may be configured with, for example, a combination of at least one shaft, at least one cam gear, and/or at least one compression spring providing elasticity.

In an embodiment of the disclosure, the hinge part H may be connected to the second side portion 402 of the second frame 221. The hinge part H may be disposed on or coupled to the second support area 2211A of the second frame 221 through screw fastening. The hinge part H may be connected to the first side portion 401 of the first frame 211. The hinge part H may be disposed on or coupled to the first support area 2111A of the first frame 211 through screw fastening.

In an embodiment of the disclosure, the hinge part H may include a rotational motion guide or a guide rail assembly.

In an embodiment of the disclosure, when the electronic device 2 is switched from the unfolded state (see FIGS. 2A and 2B) to the folded state (see FIGS. 3A and 3B), the hinge part H may be configured to provide a space in which the third display area 243 of the first display 24 may be arranged in a bent shape capable of reducing bending stress. When the electronic device 2 is switched from the unfolded state to the folded state, the hinge part H may be configured to provide a space in which the third display area 243 may be disposed in a bent shape capable of suppressing a buckling phenomenon.

In an embodiment of the disclosure, when the electronic device 2 is switched from the unfolded state to the folded state, the third display area 243 may be disposed in a water drop shape or dumbbell shape capable of reducing breakage or deformation.

According to an embodiment of the disclosure, the first inner support 411 may be at least partially positioned between the first support portion 2111 of the first frame 211 and the first cover 212. The first inner support 411 may be coupled to the first support portion 2111. The first inner support 411 may cover components disposed on the first support portion 2111 of the first frame 211, such as the first printed circuit board 421. At least a portion of the first printed circuit board 421 may be positioned between the first support portion 2111 and the second inner support 412.

According to an embodiment of the disclosure, the first inner support 411 may include a non-metallic material, and a conductive pattern used as an antenna radiator may be arranged on the first inner support 411. The conductive pattern used as an antenna radiator may be electrically connected to the first printed circuit board 421. In an embodiment, at least one flexible conductive part (not illustrated) may be disposed between the first inner support 411 and the first printed circuit board 421, and the conductive pattern of the first inner support 411 may be electrically connected to the first printed circuit board 421 via the flexible conductive part. The flexible conductive part may vary and include, for example, a conductive clip (e.g., a conductive structure including an elastic structure), a pogo pin, a spring, conductive Poron, conductive sponge, conductive rubber, conductive tape, or a conductive connector.

According to an embodiment of the disclosure, the second inner support 412 may be at least partially positioned between the first support portion 2111 of the first frame 211 and the first cover 212. The second inner support 412 may be coupled to the first support portion 2111. When viewed from above the first cover 212 (e.g., when viewed in the +z-axis direction), the first battery 431 may be positioned between the first inner support 411 and the second inner support 412. The second inner support 412 may cover components disposed on the first support portion 2111 of the first frame 211, such as the third printed circuit board 423. At least a portion of the third printed circuit board 423 may be positioned between the first support portion 2111 and the second inner support 412. The first frame 211 may be referred to as a "first front case", and the first inner support 411 and/or the second inner support 412 may be referred to as a "first rear case".

According to an embodiment of the disclosure, the second inner support 412 may include a non-metallic material, and a conductive pattern used as an antenna radiator may be arranged on the second inner support 412. The conductive pattern used as an antenna radiator may be electrically connected to the second printed circuit board 422.

In an embodiment of the disclosure, at least one flexible conductive part (not illustrated) may be disposed between the second inner support 412 and the second printed circuit board 422, and the conductive pattern of the second inner support 412 may be electrically connected to the second printed circuit board 422 via the flexible conductive part. The flexible conductive part may vary and include, for example, a conductive clip (e.g., a conductive structure including an elastic structure), a pogo pin, a spring, conductive Poron, conductive sponge, conductive rubber, conductive tape, or a conductive connector.

According to an embodiment of the disclosure, the electronic device 2 may further include a third inner support (not illustrated) positioned between the second support portion 2211 of the second frame 221 and the second display 25. The third inner support may be coupled with the second support portion 2211. The third inner support may support the second display 25 (or the rear surface of the second display 25).

According to an embodiment of the disclosure, the first speaker assembly 441 may be positioned between the second support portion 2211 of the second frame 221 and the second display 25. The first speaker assembly 441 may be disposed on or coupled to the second support portion 2211. The first speaker assembly 441 may include, for example, a first speaker and a first speaker support where the first speaker is disposed or coupled. The first speaker support may provide a sound moving path (or passage) between the first speaker and a first speaker hole provided on the second side 2212 of the second frame 221.

According to an embodiment of the disclosure, the second speaker assembly 442 may be positioned between the second support portion 2211 of the second frame 221 and the second display 25. The second speaker assembly 442 may be disposed on or coupled to the second support portion 2211. The second speaker assembly 442 may include, for example, a second speaker and a second speaker support where the first speaker is disposed or coupled. The second speaker support may provide a sound moving path (or passage) between the second speaker and a second speaker hole provided on the second side 2212 of the second frame 221.

According to an embodiment, the first antenna structure 451 may be at least partially positioned between the first support portion 2111 of the first frame 211 and the first cover 212. The first antenna structure 451 may be disposed on the surface of the first battery 431 facing the first cover 212, or on the first cover 212. The position of the first antenna structure 451 is not limited thereto and may vary. The first antenna structure 451 may be implemented, for example, in a film form, such as an FPCB. The first antenna structure 451 may include at least one conductive pattern used as a loop-type radiator. For example, the at least one conductive pattern included in the first antenna structure 451 may include a planar spiral conductive pattern (e.g., a planar coil or a pattern coil). In an embodiment, the at least one conductive pattern included in the first antenna structure 451 may be electrically connected to a wireless communication circuit (e.g., the wireless communication module 192 in FIG. 1) disposed on the first printed circuit board 421. For example, the at least one conductive pattern may be utilized for short-range wireless communication such as near-field communication (NFC). As another example, the at least one conductive pattern may be utilized for magnetic secure transmission (MST) for transmitting and/or receiving magnetic signals. In some embodiments, the at least one conductive pattern included in the antenna structure 451 may be electrically connected to a power transmission/reception circuit disposed on the first printed circuit board 421. The power transmission/reception circuit may wirelessly receive power from an external electronic device or wirelessly transmit power to an external electronic device using the at least one conductive pattern. The power transmission/reception circuit may include a power management module and may include, for example, a power management integrated circuit (PMIC) or a charger integrated circuit (IC). The power transmission/reception circuit may charge the first battery 431 and/or the second battery 432 by using the power wirelessly received by using the conductive pattern.

According to an embodiment of the disclosure, the second antenna structure 452 may be at least partially positioned between the first support portion 2111 of the first frame 211 and the first cover 212. The second antenna structure 452 may be disposed on the surface of the first inner support 411 facing the first cover 212, or on the first cover 212. The position of the second antenna structure 452 is not limited thereto and may vary. The second antenna structure 452 may be implemented, for example, in a film form, such as an FPCB. In an embodiment, a processor (e.g., the processor 120 in FIG. 1) electrically connected to a wireless communication circuit (e.g., the wireless communication module 192 in FIG. 1) may perform a positioning function (e.g., angle of arrival (AOA)) for a signal source (e.g., a responder, a transmitter, or a transmitter (Tx) device) using the second antenna structure 452. The processor may simultaneously perform positioning that measures an angle (AOA) and ranging that measures a distance (ranging). In an embodiment, the processor may determine (or estimate) the distance between the electronic device 2 and a signal source using at least one antenna element (e.g., a first antenna element, a second antenna element, and/or a third antenna element) included in the second antenna structure 452. In an embodiment, the processor may determine or estimate a reception angle of a signal with respect to a configured axis of the electronic device 2 (e.g., the direction of a signal) using at least one of a difference in arrival times of response messages to request messages, a difference in arrival distances between received signals, or a phase difference the received signals through at least two antenna elements included in the second antenna structure 452. The electronic device 2 may support the positioning function using a wide bandwidth (e.g., ultra-wide band (UWB)). For example, the UWB may refer to a technology that communicates over a wide bandwidth and follows the international standard of IEEE 802.15.4. In an embodiment, the processor may determine or estimate the position of a signal source (e.g., a responder, a transmitter, or a Tx device) relative to the electronic device 2 (e.g., an initiator, receiver, or Rx device) using the phase difference of the signals received through multiple antenna elements included in the second antenna structure 452. The second antenna structure 452 may be provided as a printed circuit board (e.g., a flexible printed circuit board (FPCB)) and may be, for example, a patch antenna that includes multiple patches (e.g., a first antenna element, a second antenna element, and a third antenna element).

According to an embodiment, when viewed from above the first cover 212, the first flexible printed circuit board 461 may overlap the first battery 431. The third surface of the second flexible printed circuit board 463 may face the first battery 431.

According to an embodiment, the first flexible printed circuit board 461 may electrically connect the first printed circuit board 421 and the second printed circuit board 422. The first flexible printed circuit board 461 may include signal lines (or electrical paths) electrically connecting the first printed circuit board 421 and the second printed circuit board 422 and conductive patterns for forming a ground area to reduce electromagnetic interference (EMI) regarding the signal lines.

According to an embodiment, the first flexible printed circuit board 461 may be a flexible RF cable (FRC). The second printed circuit board 422 may include an antenna radiator or may be electrically connected to an antenna radiator. A wireless communication circuit (e.g., the wireless communication module 192 in FIG. 1) may be disposed on the first printed circuit board 421. The wireless communication circuit may be electrically connected to the antenna radiator via the first flexible printed circuit board 461. The wireless communication circuit may transmit a radiation current (or a radio signal, an RF signal, or an electromagnetic signal) to the antenna radiator via the first flexible printed circuit board 461. The wireless communication circuit may process a signal (or an RF signal) transmitted or received via the antenna radiator.

According to an embodiment, at least one conductive part included in the first side 2112 of the first frame 211 may be used as at least a portion of an antenna radiator or radiating part that transmits electromagnetic waves (or electromagnetic signals) to the exterior or receives electromagnetic waves from the exterior.

In an embodiment, the electronic device 2 may include a flexible conductive member disposed on the second printed circuit board 422. The second printed circuit board 422 may be in elastic contact with the conductive part included in the first side (2112) of the first frame 211. The conductive part included in the first side 2112 of the first frame 211 may be electrically connected to the second printed circuit board 422. The second printed circuit board 422 may include, but is not limited to, a conductive clip (e.g., a conductive structure including a resilient structure), a pogo pin, a spring, a conductive poron, a conductive rubber, a conductive tape, or a conductive connector.

The second printed circuit board 422 may include a conductive line (e.g., a signal line) electrically connected to the first flexible printed circuit board 461. The conductive part included in the first side 2112 of the first frame 211 may be electrically connected to a wireless communication circuit (e.g., the wireless communication module (192) of FIG. 1) disposed on the first printed circuit board 421 via the second printed circuit board 422 and the first flexible printed circuit board 461.

In an embodiment of the disclosure, at least one conductive member included in the second side 2212 of the second frame 221 may be configured to operate as an antenna radiator in a substantially identical or similar manner.

In an embodiment of the disclosure, the second flexible printed circuit board 463 may electrically connect the second printed circuit board 422 and the third printed circuit board 423.

In an embodiment of the disclosure, the third flexible printed circuit board 464 may electrically connect the second printed circuit board 422 and the third printed circuit board 423.

According to an embodiment, the fourth flexible printed circuit board 465 may electrically connect the first printed circuit board 421 and the second printed circuit board 422. For example, the connector module disposed on the second printed circuit board 422 may be electrically connected to the first printed circuit board 421 via the fourth flexible printed circuit board 465. When viewed from above the first cover 212, the fourth flexible printed circuit board 465 may overlap the first battery 431.

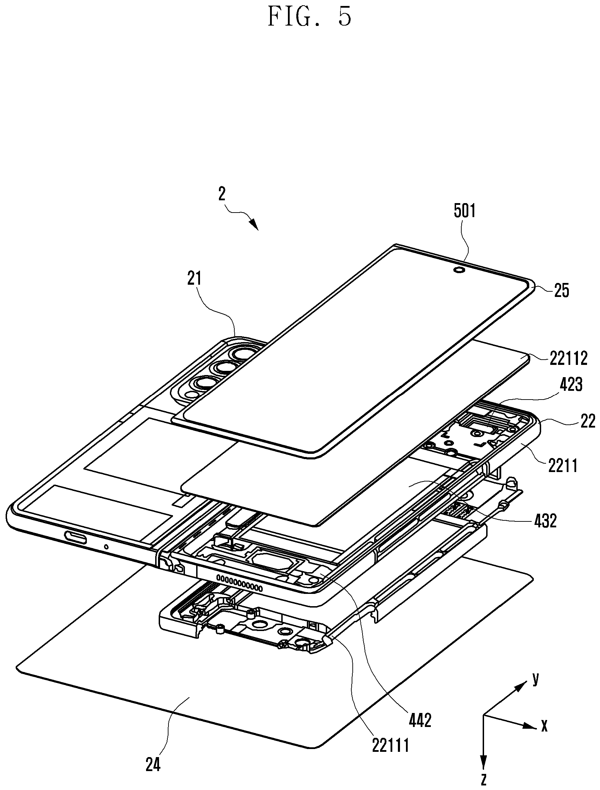

FIG. 5 is an exploded perspective view of an electronic device 2 according to an embodiment of the disclosure in the unfolded state.

Referring to FIG. 5, the electronic device 2 may include a first housing 21 and a second housing 22.

In an embodiment of the disclosure, the second housing 22 may include a second support portion 2211. The second support portion 2211 may include a first display support member 22111 and a second display support member 22112.

In an embodiment of the disclosure, the first display support member 22111 may correspond to the second support area 2211A. The first display support member 22111 may be disposed between the first display 24 and the second housing 22.

In an embodiment of the disclosure, the second display support member 22112 may be disposed between the second display 25 and the second housing 22.

In an embodiment of the disclosure, the second display support member 22112 may correspond to the fourth support area (not illustrated). The fourth support area (not illustrated) may be an area disposed on a surface of the second support portion 2211 opposite to the second support area 2211A. The second support area 2211A may face the first display 24. The fourth support area (not illustrated) may face the second display 25.

In one embodiment of the disclosure, the first display support member 22111 may allow the first display 24 to be coupled to the second support member 2211 and maintain its shape.

In one embodiment of the disclosure, the second display support member 22112 may allow the second display 25 to be coupled to the second support member 2211 and maintain its shape.

In one embodiment of the disclosure, the second speaker assembly 442 may be disposed between the first display support member 22111 and the second display support member 22112.

According to an embodiment of the disclosure, the second speaker assembly 442 may be positioned on the second support portion 2211 of the second frame 221.

In an embodiment of the disclosure, the second speaker assembly 442 may be disposed on or coupled to the second support portion 2211.

In an embodiment of the disclosure, the second speaker assembly 442 may be disposed in the second housing 22.

In an embodiment of the disclosure, in the electronic device 2, the second speaker assembly 442 may be disposed between the first display support member 22111 and the second display support member 22112.

In an embodiment of the disclosure, the second speaker assembly 442 may include, for example, a second speaker and a second speaker support where the first speaker is disposed or coupled. The second speaker support may provide a sound moving path (or passage) between the second speaker and a second speaker hole provided on the second side 2212 of the second frame 221.

In an embodiment of the disclosure, the electronic device 2 may include a third printed circuit board 423, a second battery 432, and a second speaker assembly 442 in the y-axis direction in the second housing 22. In the electronic device 2, the third printed circuit board 423, the second battery 432, and the second speaker assembly 442 in the y-axis direction in the second housing 22.

In an embodiment of the disclosure, the first camera module 305 (see FIG. 2B) may be positioned in the inner space of the second housing 22 to correspond to the second cover 222.

In an embodiment of the disclosure, the second display 25 may further include an opening 501 through which the first camera module 305 may obtain light from the exterior. The first camera module 305 may be positioned in alignment with the opening 501 provided in the second display 25 or may be at least partially inserted into the opening 501. The opening 501 of the second display 25 may be provided as a through hole or a notch.

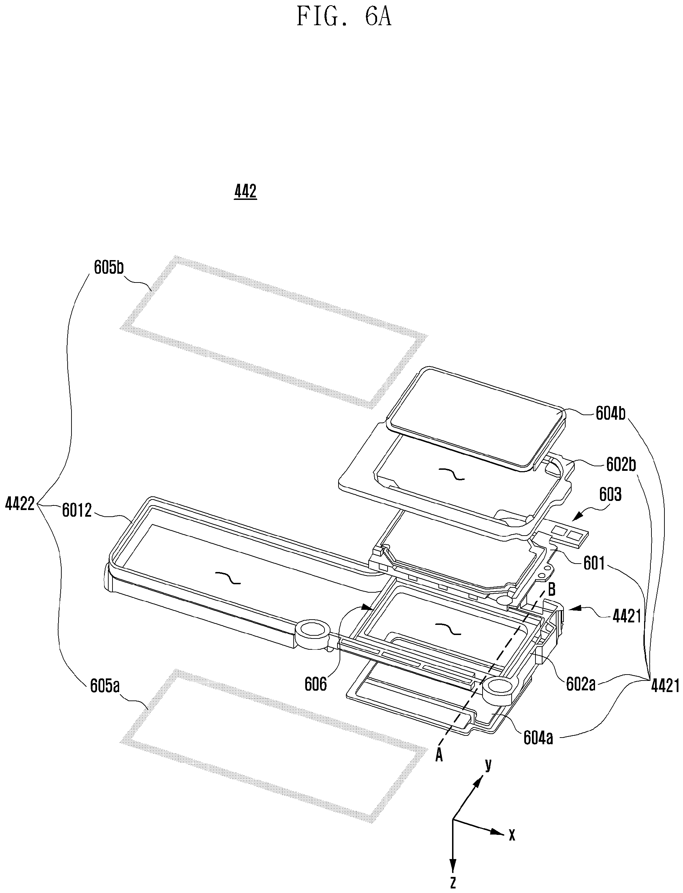

FIG. 6A is an exploded perspective view of the second speaker assembly 442 according to an embodiment of the disclosure.

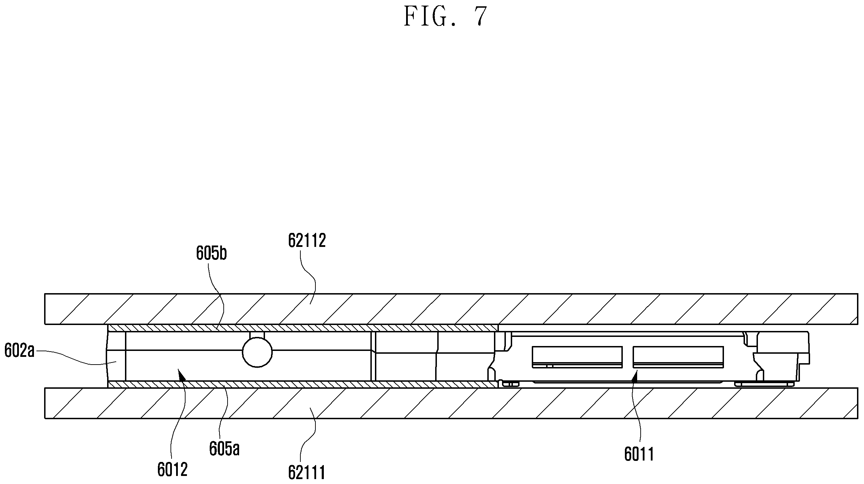

FIG. 7 is a cross-sectional view of the electronic device 2 and the second speaker assembly 442 according to an embodiment of the disclosure.

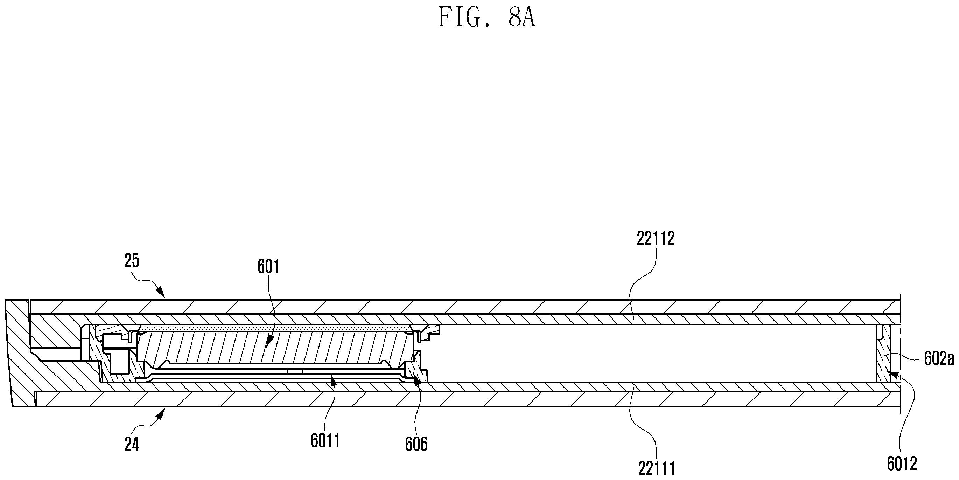

FIG. 8A is a cross-sectional view of the electronic device 2 according to an embodiment of the disclosure and the second speaker assembly 442 of FIG. 6A.

Referring to FIGS. 6A, 7, and 8A, the second speaker assembly 442 may include a speaker 601, a first speaker frame 602a, a second speaker frame 602b, a speaker flexible printed circuit board 603, a first speaker support member 604a, a second speaker support member 604b, a first sealing member 605a, and a second sealing member 605b.

In an embodiment of the disclosure, the second speaker assembly 442 may include a speaker mounting housing 4421 and a speaker volume housing 4422.

In an embodiment of the disclosure, the speaker mounting housing 4421 may be an area in which the speaker 601 is accommodated. The speaker mounting housing 4421 may include a speaker 601, a first speaker frame 602a, a second speaker frame 602b, a speaker flexible printed circuit board 603, a first speaker support member 604a, and a second speaker support member 604b.

In an embodiment of the disclosure, the speaker mounting housing 4421 may include a conduit for outputting sound to the exterior.

In an embodiment of the disclosure, the speaker mounting housing 4421 may output sound, which is output from the speaker 601 and/or the speaker volume housing 4422, to the exterior through a conduit.

In an embodiment of the disclosure, the speaker volume housing 4422 may compress and/or reflect sound, which is output from the speaker 601, and transmit the sound to the speaker mounting housing 4421.

In an embodiment of the disclosure, the speaker volume housing 4422 may compress and/or reflect sound, which is output from the speaker 601, and transmit the sound to a diaphragm of the speaker 601.

In an embodiment of the disclosure, the first speaker frame 602a and the second speaker frame 602b may be arranged between the first display support member 22111 and the second display support member 22112.

In an embodiment of the disclosure, the first speaker frame 602a may include a speaker mounting frame 6011 and a speaker volume frame 6012.

In an embodiment of the disclosure, the first speaker frame 602a may divide the speaker mounting frame 6011 and the speaker volume frame 6012 based on a separating wall 606. The separating wall 606 may spatially separate the speaker mounting frame 6011 and the speaker volume frame 6012.

In an embodiment of the disclosure, the first speaker frame 602a may divide the speaker mounting housing 4421 and the speaker volume housing 4422 based on a separating wall 606. The separating wall 606 may spatially separate the speaker mounting housing 4421 and the speaker volume housing 4422.

In an embodiment of the disclosure, the speaker mounting housing 4421 may include a speaker 601, a speaker mounting frame 6011, a second speaker frame 602b, a speaker flexible printed circuit board 603, a first speaker support member 604a, and a second speaker support member 604b.

In an embodiment of the disclosure, the speaker mounting housing 4421 may accommodate the speaker 601 by using the speaker mounting frame 6011, the second speaker frame 602b, the first speaker support member 604a, and the second speaker support member 604b. The speaker mounting housing 4421 may accommodate the speaker 601 and allow sound, which is output from the speaker 601, to move using a sound moving path included therein.

In an embodiment of the disclosure, the first speaker frame 602a may be coupled with the second speaker frame 602b to accommodate the speaker 601.

In an embodiment of the disclosure, the first speaker support member 604a may be coupled to at least a portion of the first speaker frame 602a. The first speaker support member 604a may couple the second speaker assembly 442 to the second housing 22 of the electronic device 2. The first speaker support member 604a may prevent the second speaker assembly 442 coupled to the second housing 22 from being detached.

In an embodiment of the disclosure, the second speaker support member 604b may be coupled to at least a portion of the second speaker frame 602b. The second speaker support member 604b may couple the second speaker assembly 442 to the second housing 22 of the electronic device 2. The second speaker support member 604b may prevent the second speaker assembly 442 coupled to the second housing 22 from being detached.

In an embodiment of the disclosure, the first speaker frame 602a may be coupled with the first sealing member 605a and the second sealing member 605b to form a speaker volume housing 4422. The speaker volume housing 4422 may include the first speaker frame 602a, the first sealing member 605a, and the second sealing member 605b.

In an embodiment of the disclosure, the speaker volume frame 6012 may be coupled with the first sealing member 605a and the second sealing member 605b to form a speaker volume housing 4422. The speaker volume housing 4422 may include the speaker volume frame 6012, the first sealing member 605a, and the second sealing member 605b.

Referring to FIG. 6A, the speaker volume frame 6012 may have openings formed toward the first display support member 22111 and the second display support member 22112.

In an embodiment of the disclosure, the first sealing member 605a may be coupled with the first display support member 22111 to form the speaker volume housing 4422.

In an embodiment of the disclosure, the first sealing member 605a may be disposed between the first display support member 22111 and the first speaker frame 602a.

In an embodiment of the disclosure, the first sealing member 605a may be disposed between the first display support member 22111 and the speaker volume frame 6012.

In an embodiment of the disclosure, the second sealing member 605b may be coupled with the second display support member 22112 to form the speaker volume housing 4422.

In an embodiment of the disclosure, the second sealing member 605b may be disposed between the second display support member 22112 and the first speaker frame 602a.

In an embodiment of the disclosure, the second sealing member 605b may be disposed between the second display support member 22112 and the speaker volume frame 6012.

In an embodiment of the disclosure, the first sealing member 605a and the second sealing member 605b may be made of an elastic material.

In an embodiment of the disclosure, the first sealing member 605a and the second sealing member 605b may be a ring shape corresponding to the perimeter of the speaker volume frame 6012.

In an embodiment of the disclosure, the first sealing member 605a and the second sealing member 605b may be made of silicone, rubber, and/or urethane, or a mixed material thereof.

In an embodiment of the disclosure, the speaker flexible circuit board 603 may be electrically connected to a printed circuit board (e.g., the third printed circuit board 423) included in the electronic device 2.

In an embodiment of the disclosure, the speaker 601 may output sound based on an electrical signal transmitted through the speaker flexible circuit board 603.

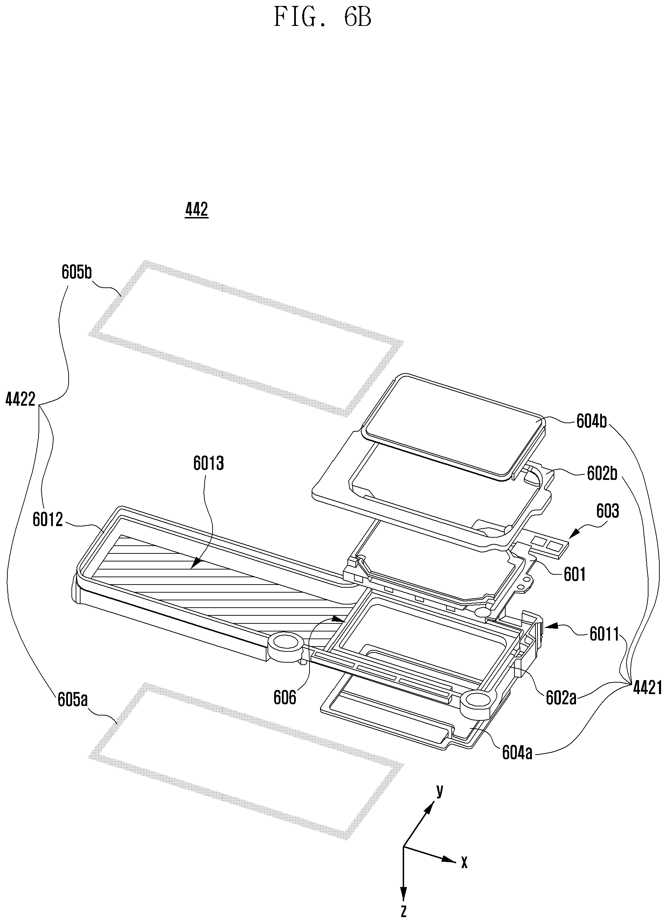

FIG. 6B is an exploded perspective view of a second speaker assembly 442 according to an embodiment of the disclosure.

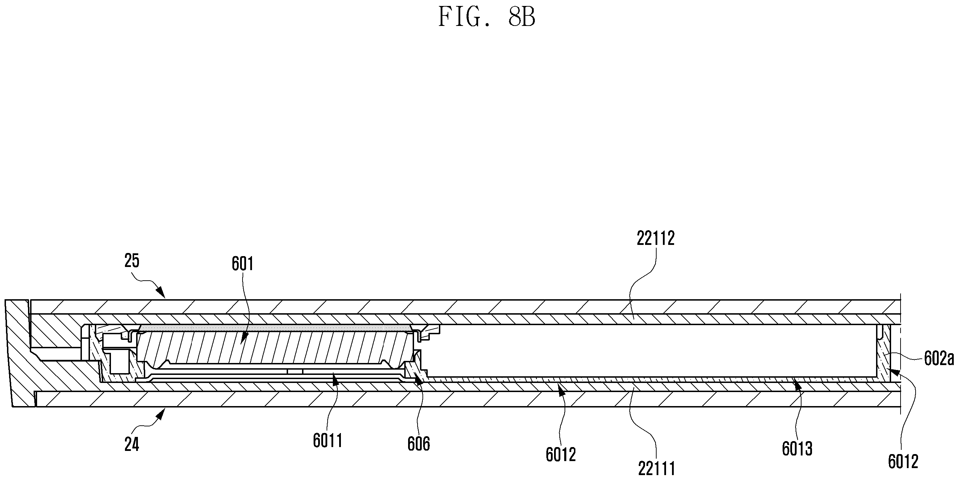

FIG. 8B is a cross-sectional view of an electronic device 2 according to an embodiment of the disclosure and the second speaker assembly 442 of FIG. 6B.

The second speaker assembly 442 of FIG. 6B may be different from the second speaker assembly 442 of FIG. 6A in terms of some structures of the first speaker frame 602a or the speaker volume frame 6012, but the remaining structures may be the same. However, the disclosure is not limited thereto.

Referring to FIGS. 6B and 8B, the second speaker assembly 442 may further include a first sealing wall 6013 in the first speaker frame 602a or the speaker volume frame 6012.

In an embodiment of the disclosure, in the second speaker assembly 442, at least one surface of the speaker volume frame 6012 may be sealed with a sealing wall (e.g., the first sealing wall 6013), and another surface may be coupled to the display support member (e.g., the first display support member 22111 or the second display support member 22112) via a sealing member (e.g., the first sealing member 605a or the second sealing member 605b).

Referring to FIGS. 6B and 8B, in the second speaker assembly 442, one surface of the speaker volume housing 4422 may be sealed with the first sealing wall 6013 of the speaker volume frame 6012, and another surface of the speaker volume housing 4422 may be coupled to the second display support member 22112 via the second sealing member 605b.

Referring to FIGS. 6B and 8B, in the second speaker assembly 442, one surface of the speaker volume frame 6012 may be sealed with the first sealing wall 6013 of the speaker volume frame 6012, and another surface of the speaker volume frame 6012 may be coupled to the second display support member 22112 via the second sealing member 605b.

Referring to FIGS. 6B and 8B, the first sealing wall 6013 may be disposed on a surface of the speaker volume frame 6012 facing the first display support member 22111.

Referring to FIGS. 6B and 8B, the first sealing member 605a may be omitted from the second speaker assembly 442. However, without being limited thereto, in FIGS. 6B and 8B, the second speaker assembly 442 may include the first sealing member 605a between the first sealing wall 6013 and the first display support member 22111.

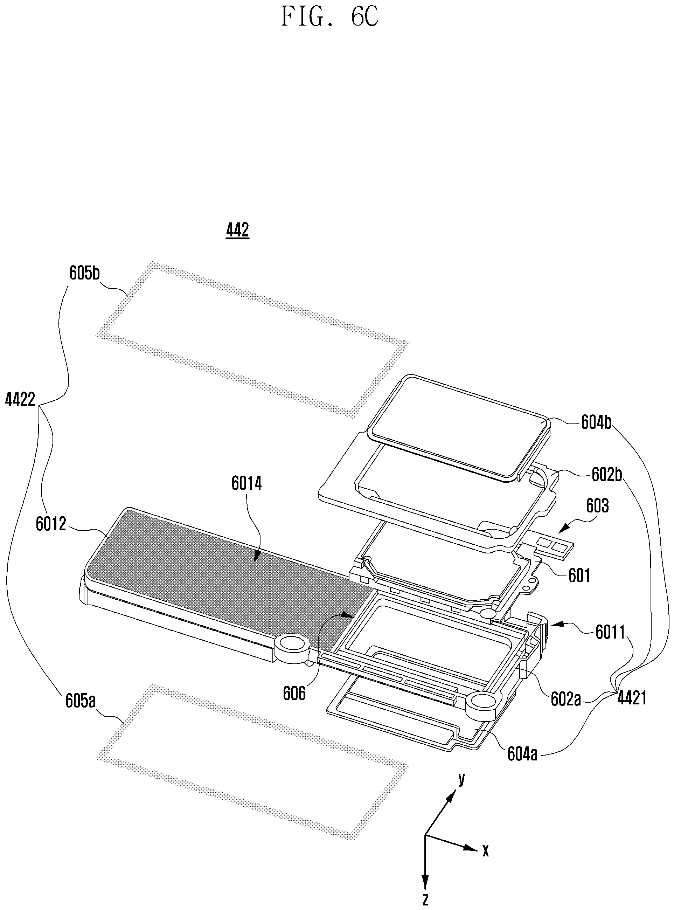

FIG. 6C is an exploded perspective view of the second speaker assembly 442 according to an embodiment of the disclosure.

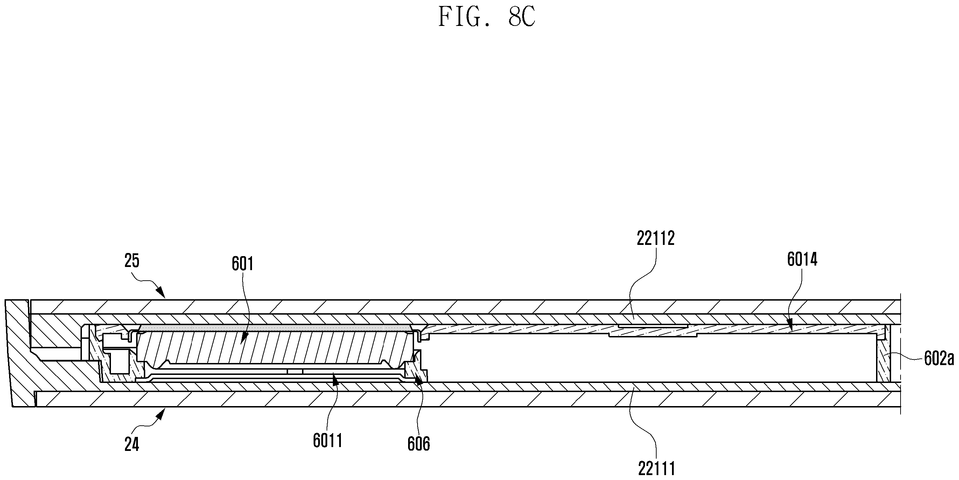

FIG. 8C is a cross-sectional view of an electronic device 2 according to an embodiment of the disclosure and the second speaker assembly 442 of FIG. 6C.

The second speaker assembly 442 of FIG. 6C may be different from the second speaker assembly 442 of FIG. 6A in terms of some structures of the first speaker frame 602a or the speaker volume frame 6012, but the remaining structures may be the same. However, the disclosure is not limited thereto.

Referring to FIGS. 6C and 8C, the second speaker assembly 442 may further include a first sealing wall 6014 in the first speaker frame 602a or the speaker volume frame 6012.

In an embodiment of the disclosure, in the second speaker assembly 442, at least one surface of the speaker volume frame 6012 is sealed with a sealing wall (e.g., the first sealing wall 6013), and another surface may be coupled to the display support member (e.g., the first display support member 22111 or the second display support member 22112) via a sealing member (e.g., the first sealing member 605a or the second sealing member 605b).

Referring to FIGS. 6C and 8C, in the second speaker assembly 442, one surface of the speaker volume housing 4422 may be sealed with the second sealing wall 6014 of the speaker volume frame 6012, and another surface of the speaker volume housing 4422 may be coupled to the first display support member 22111 via the first sealing member 605a.

Referring to FIGS. 6C and 8C, in the second speaker assembly 442, one surface of the speaker volume frame 6012 may be sealed with the second sealing wall 6014 of the speaker volume frame 6012, and another surface of the speaker volume frame 6012 may be coupled to the first display support member 22111 via the first sealing member 605a.

Referring to FIGS. 6C and 8C, the second sealing wall 6014 may be disposed on a surface of the speaker volume frame 6012 facing the first display support member 22112.

Referring to FIGS. 6C and 8C, the second sealing member 605b may be omitted from the second speaker assembly 442. However, without being limited thereto, in FIGS. 6C and 8C, the second speaker assembly 442 may include the second sealing member 605b between the second sealing wall 6014 and the second display support member 22112.

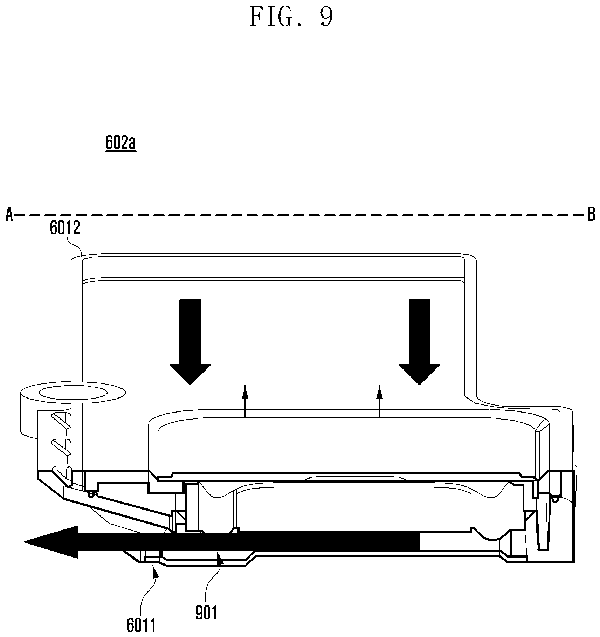

FIG. 9 is a cross-sectional view of the first speaker frame 602a according to an embodiment of the disclosure taken along line A-B in FIG. 6A.

Referring to FIG. 9, sound output from the speaker 601 may be transmitted to the first sound conduit 901 and the speaker volume frame 6012 of the speaker mounting frame 6011, and may be output to the conduit 901 together with the speaker volume defined in the speaker volume housing 4422.

The sound output from the speaker 601 is reflected as sound (or sound pressure) from the speaker volume housing 4422 and transmitted again to the diaphragm of the speaker 601, and the compressed and/or reflected sound may be transmitted to the diaphragm of the speaker 601 and transmitted through the conduit 901.

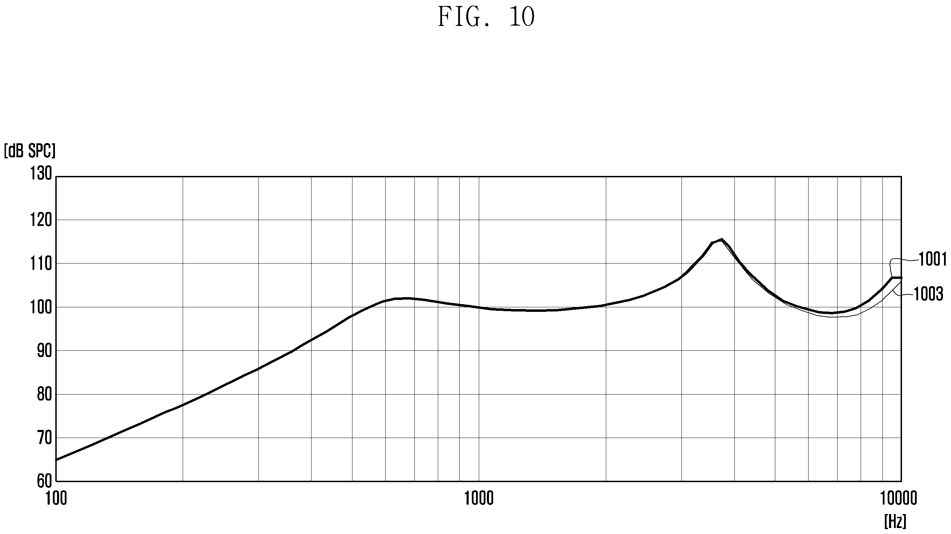

FIG. 10 is a graph showing frequency characteristics depending on the volume of the speaker volume of the second speaker assembly 442 according to an embodiment of the disclosure.

Graph 1001 is a graph showing frequency characteristics of the second speaker assembly 442 according to embodiments of the disclosure, and Graph 1003 is a graph showing frequency characteristics of a general speaker assembly.

The second speaker assembly 442 of the disclosure includes the speaker volume defined by the first display support member 22111 and the second display support member 22112 coupled to the opened first speaker frame 602a with a sealing member (e.g., the first sealing member 605a or the second sealing member 605b).

In comparison, the general speaker assembly has a smaller volume (or volume) than the second speaker assembly 442 of the disclosure because the speaker frame or speaker volume frame is sealed through injection molding.

Comparing Graphs 1001 and 1003, the second speaker assembly 442 of the disclosure having a relatively large speaker volume may have improved performance in a high-frequency band.

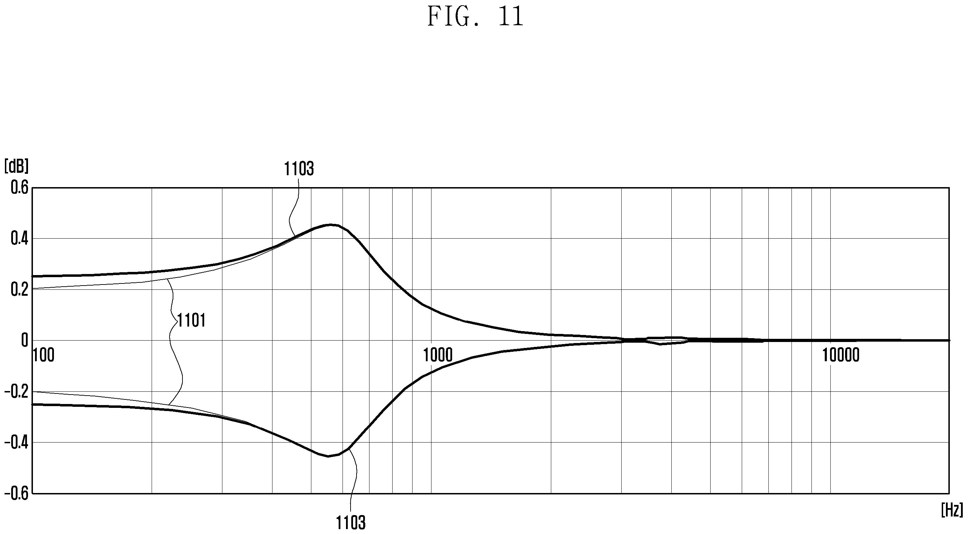

FIG. 11 is a graph showing phase characteristics depending on the volume of the speaker volume of the second speaker assembly 442 according to an embodiment of the disclosure.

Graph 1101 is a graph showing frequency characteristics of the second speaker assembly 442 according to embodiments of the disclosure, and Graph 1103 is a graph showing frequency characteristics of a general speaker assembly.

The second speaker assembly 442 of the disclosure includes the speaker volume defined by the first display support member 22111 and the second display support member 22112 coupled to the opened first speaker frame 602a with a sealing member (e.g., the first sealing member 605a or the second sealing member 605b).

In comparison, the general speaker assembly has a smaller volume (or volume) than the second speaker assembly 442 of the disclosure because the speaker frame or speaker volume frame is sealed through injection molding.

Comparing Graphs 1101 and 1103, the second speaker assembly 442 of the disclosure having a relatively large speaker volume may have improved phase characteristics across the entire band.

According to an embodiment of the disclosure, an electronic device 2 may include a foldable housing 20 including a hinge (e.g., the hinge part H), a first housing 21 connected to the hinge (e.g., the hinge part H) and including a first surface oriented in a first direction and a second surface oriented in a second direction opposite to the first direction, and a second housing 22 connected to the hinge (e.g., the hinge part H) and including a third surface oriented in a third direction and a fourth surface oriented in a fourth direction opposite to the third direction. The second housing may be folded with the first housing 21 about the hinge (e.g., the hinge part H), the first surface faces the third surface when folded, and the third direction is the same as the first direction when unfolded. The electronic device may further include a first display 24 extending from the first surface to the third surface and defining at least a portion of the first surface and the third surface, and a second display 25 defining at least a portion of the fourth surface. The second housing 22 may include a first display support member 22111 configured to support the first display 24, a second display support member 22112 configured to support the second display 25, and a speaker assembly (e.g., the second speaker assembly 442) coupled between the first display support member 22111 and the second display support member 22112 with sealing members (e.g., a first sealing member 605a and a second sealing member 605b) to define a speaker volume space.

According to an embodiment of the disclosure, the speaker assembly (e.g., the second speaker assembly 442) may include a speaker mounting housing 4421 configured to accommodate a speaker 601 and output sound, which is output by the speaker 601, to the exterior, and a speaker volume housing 4422 configured to compress or reflect sound from the speaker and transmit the compressed or reflected sound to the speaker mounting housing 4421.

According to an embodiment of the disclosure, the speaker assembly (e.g., the second speaker assembly 442) may include a first speaker frame 602a, a second speaker frame 602b coupled with the first speaker frame 602a, a first speaker support member 604a at least partially coupled to the second speaker frame 602b, and a second speaker support member 604b at least partially coupled to the second speaker frame 602b.

According to an embodiment of the disclosure, the sealing members (e.g., the first sealing member 605a and the second sealing member 605b) may include a first sealing member 605a disposed between the first speaker frame 602a and the first display support member 22111, and a second sealing member 605b disposed between the first speaker frame 602a and the second display support member 22112.

According to an embodiment of the disclosure, the first speaker frame 602a may include a speaker mounting frame 6011 coupled with the second speaker frame 602b, and a speaker volume frame 6012 coupled with the first sealing member 605a and the second sealing member 605b.

According to an embodiment of the disclosure, the first sealing member 605a may correspond to the perimeter of the speaker volume frame 6012 and may have a ring shape.

According to an embodiment of the disclosure, the second sealing member 605b may correspond to the perimeter of the speaker volume frame 6012 and may have a ring shape.

According to an embodiment of the disclosure, the first speaker frame 602a may include a separation wall 606 that spatially separates the speaker mounting frame 6011 and the speaker volume frame 6012.

According to an embodiment of the disclosure, the speaker volume frame 6012 may include a first sealing wall 6013 disposed on a surface facing the first display support member 22111.

According to an embodiment of the disclosure, the speaker volume housing 4422 may be coupled with the second sealing member 605b on a surface of the speaker volume frame 6012 facing the second display support member 22112.

According to an embodiment of the disclosure, the speaker volume frame 6012 may include a second sealing wall 6014 disposed on a surface facing the second display support member 22112.

According to an embodiment of the disclosure, the speaker volume housing 4422 may be coupled with the first sealing member 605a on a surface of the speaker volume frame 6012 facing the first display support member 22111.

According to an embodiment of the disclosure, the speaker assembly (e.g., the second speaker assembly 442) may include a first display support member 22111 disposed on a first surface oriented in a first direction, a second display support member 22112 disposed on a second surface oriented in a second direction opposite to the first direction, a speaker mounting housing 4421 configured to the speaker 601 and to output sound, which is output by the speaker 601, to the exterior, and a speaker volume housing 4422 coupled between the first display support member 22111 and the second display support member 22112 with the sealing members (e.g., the first sealing member 605a, the second sealing member 605b) and configured to compress or reflect the sound from the speaker and transmits the compressed or reflected sound to the speaker mounting housing 4421.

According to an embodiment of the disclosure, the speaker assembly (e.g., the second speaker assembly 442) may further include a first speaker frame 602a, a second speaker frame 602b coupled with the first speaker frame 602a, a first speaker support member 604a at least partially coupled to the second speaker frame 602b; and a second speaker support member 604b at least partially coupled to the second speaker frame 602b.

The electronic devices according to the embodiments disclosed herein may be any of various types of devices. The electronic devices may include, for example, a portable communication device (e.g., a smartphone), a computer device, a portable multimedia device, a portable medical device, a camera, a wearable device, or a home appliance. The electronic devices according to the embodiments disclosed herein are not limited to the above-described devices.

It is to be understood that various embodiments of the disclosure and terms for describing the embodiments are not intended to limit the technical features disclosed herein to specific embodiments, and that the embodiments include various modifications, equivalents, or substitutions of the corresponding embodiments. In connection with the description made with reference to the drawings, similar or related components may be denoted by similar reference numerals. The singular form of a noun corresponding to an item may include one or more instances of the item unless the relevant context clearly indicates otherwise. Herein, each of phrases, such as "A or B", "at least one of A and B", "at least one of A or B", "A, B, or C", "at least one of A, B, and C", and "at least one of A, B, or C" may include any one of the items listed together in the corresponding phrase or all possible combinations of the items. Terms such as "1^{st}" , "2^{nd}", "first", and "second" may simply be used to distinguish a given component from other corresponding components and do not limit the corresponding components in other aspects (e.g., importance or order). When a certain (e.g., a first) component is mentioned as being "coupled" or "connected" to another (e.g., a second) component, with or without a term "functionally" or "communicatively", it means that the certain component may be connected to the other component directly (e.g., wiredly), wirelessly, or via a third component.

The term "module" used herein may include a unit implemented in hardware, software, or firmware, and may be used interchangeably with terms such as "logic", "logic block", "component", "circuit", or the like. The module may be an integrally configured component or a minimum unit or a portion of the component, which performs one or more functions. For example, according to an embodiment, the module may be implemented in the form of an application-specific integrated circuit (ASIC).

Various embodiments disclosed herein may be implemented by software (e.g., the program 140) including one or more instructions stored in a storage medium (e.g., internal memory 136 or external memory 138) readable by a machine (e.g., an electronic device 101). For example, a processor (e.g., the processor 120) of a device (e.g., the electronic device 101) may call and execute at least one of the stored one or more instructions from the storage medium. This enables the device to be operated to perform at least one function in response to the at least one called instruction. The one or more instructions may include codes generated by a compiler or code capable of being executed by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish the case where data is permanently stored on the storage medium from the case where data is temporarily stored.

According to an embodiment, a method according to various embodiments disclosed herein may be included and provided in a computer program product. The computer program product may be traded as a product between a seller and a purchaser. The computer program product may be distributed in the form of a machine-readable storage medium (e.g., a compact disc read only memory (CD-ROM)), or may be distributed through an application store (e.g., Play Store^{™}), directly between two user devices (e.g., smartphones), or online (e.g., downloaded or uploaded). In the case of online distribution, at least part of the computer program product may be temporarily stored or produced in a machine-readable storage medium such as a manufacturer's server, a server of an application store, or the memory of a relay server.

According to various embodiments, each (e.g., a module or a program) of the above-described components may include one or more entities. According to various embodiments, one or more of the components or operations described above may be omitted, or one or more other components or operations may be added. Alternatively or additionally, multiple components (e.g., modules or programs) may be integrated into a single component. In such a case, the integrated component may perform one or more functions of each of the multiple components in the same or a similar manner as performed by the corresponding one of the multiple components before the integration. According to various embodiments, operations performed by a module, a program, or other components may be executed sequentially, in parallel, repetitively, or heuristically, one or more of the operations may be executed in a different order or omitted, or one or more other operations may be added.

## Claims

1. An electronic device comprising:
a hinge;
a foldable housing comprising a first housing coupled to the hinge, and a second housing coupled to the hinge and foldable relative to the first housing about the hinge;
a first display supported by the first housing; and
a second display supported by the second housing,
wherein the second housing comprises:
a first display support member configured to support the first display;
a second display support member configured to support the second display; and
a speaker assembly coupled between the first display support member and the second display support member with sealing members to define a speaker volume.

2. The electronic device of claim 1, wherein the speaker assembly comprises:
a speaker mounting housing configured to accommodate a speaker and output sound, which is output by the speaker, to the exterior; and
a speaker volume housing configured to compress or reflect the sound from the speaker and transmit the compressed or reflected sound to the speaker mounting housing.

3. The electronic device of claim 2, wherein the speaker assembly comprises:
a first speaker frame;
a second speaker frame coupled to the first speaker frame;
a first speaker support member at least partially coupled to the second speaker frame; and
a second speaker support member at least partially coupled to the second speaker frame,
wherein the sealing members comprise:
a first sealing member disposed between the first speaker frame and the first display support member; and
a second sealing member disposed between the first speaker frame and the second display support member.

4. The electronic device of claim 3, wherein the first speaker frame comprises:
a speaker mounting frame coupled with the second speaker frame; and
a speaker volume frame coupled with the first sealing member and the second sealing member.

5. The electronic device of claim 4, wherein the first sealing member corresponds to a perimeter of the speaker volume frame and has a ring shape.

6. The electronic device of claim 4, wherein the second sealing member corresponds to a perimeter of the speaker volume frame and has a ring shape.

7. The electronic device of claim 4, wherein the first speaker frame comprises a partition wall that spatially separates the speaker mounting frame from the speaker volume frame.

8. The electronic device of claim 4, wherein the speaker volume frame comprises a first sealing wall disposed on a surface facing the first display support member.

9. The electronic device of claim 8, wherein the speaker volume housing is coupled to the second sealing member on a surface of the speaker volume frame facing the second display support member.

10. The electronic device of claim 4, wherein the speaker volume frame comprises a second sealing wall disposed on a surface facing the second display support member.

11. The electronic device of claim 10, wherein the speaker volume housing is coupled to the first sealing member on a surface of the speaker volume frame facing the first display support member.

12. The electronic device of claim 1, further comprising:
a first display support member disposed on a first surface oriented in a first direction;
a second display support member disposed on a second surface oriented in a second direction opposite to the first direction;
a speaker mounting housing configured to accommodate a speaker and output sound, which is output by the speaker, to the exterior; and
a speaker volume housing coupled between the first display support member and the second display support member with sealing members and configured to compress or reflect the sound from the speaker and transmit the compressed or reflected sound to the speaker mounting housing.

13. The electronic device of claim 12, further comprising:
a first speaker frame;
a second speaker frame coupled to the first speaker frame;
a first speaker support member at least partially coupled to the second speaker frame; and
a second speaker support member at least partially coupled to the second speaker frame,
wherein the sealing members comprise:
a first sealing member disposed between the first speaker frame and the first display support member; and
a second sealing member disposed between the first speaker frame and the second display support member.

14. The electronic device of claim 13, wherein the first speaker frame comprises:
a speaker mounting frame coupled with the second speaker frame; and
a speaker volume frame coupled with the first sealing member and the second sealing member.

15. The electronic device of claim 14, wherein the first sealing member corresponds to a perimeter of the speaker volume frame and has a ring shape.
